# EUROPEAN PATENT APPLICATION

(11) **EP 4 793 972 A1**
(43) Date of publication of application: **19.08.2026**
(21) Application number: 25215713.6
(22) Date of filing: 13.11.2025
(51) Int. Cl.: H01B 13/012

(54) **HOLDERS, SYSTEMS, AND METHODS FOR ASSEMBLING BUNDLES**

(30) Priority: 18.02.2025 US 202519055758
(71) Applicant: The Boeing Company, Arlington, VA 22202 (US)
(72) Inventor: MOHLMAN, Shawn D., Arlington, 22202 (US); ROGERS, Ryan P., Arlington, 22202 (US); BLACKEN, Lars E., Arlington, 22202 (US); BARLETTA, Aldo M., Arlington, 22202 (US); MCCASKEY, Jeffrey A., Arlington, 22202 (US)
(74) Representative: St Clair Jones, Gregory Arthur Langley

(57) **Abstract**

A system for processing a workpiece includes a constraining container, a pressure-triggered coupling, and an expandable medium. The constraining container includes an interior volume and is configured to enclose at least a portion of the workpiece to be processed. The pressure-triggered coupling is configured to secure the constraining container in a closed configuration and is configured to release the constraining container upon an interior pressure of the interior volume of the constraining container reaching a trigger pressure. The expandable medium is configured to be disposed within the interior volume between at least a portion of the constraining container and at least a portion of the workpiece and is configured to expand such that the expandable medium applies a positive pressure to the constraining container and the workpiece.

## Description

### FIELD

The present disclosure relates generally to production of electrical raceway and, more particularly, to wire holders for electrical raceway systems and methods.

### BACKGROUND

Many vehicles, such as aircraft, have complex electrical system distributed through the body of the vehicle. Such electrical systems require bundles of wires, cables, connectors, and related fittings, referred to as a wire raceway, to connect the various electrical components. During assembly of the wire raceway, groups of wires need to be held in position for bundling. However, conventional existing devices utilize elastic bands to maintain closure, thereby requiring a positive downward force to place an individual wire within the holding device and requiring a stronger upward force to extract a group of wires from the holding device. As such, these holding devices are prone to degradation or damage to the wires, resulting in increased maintenance cost. Accordingly, those skilled in the art continue with research and development efforts in the field of electrical raceway systems.

### SUMMARY

Disclosed are examples of a holder for an elongate member, a bundling system, an electrical raceway system, and a method for supporting and bundling elongate members. The following is a non-exhaustive list of examples, which may or may not be claimed, of the subject matter according to the present disclosure.

In an example, the disclosed holder includes a frame. The frame includes a first post and a second post that is spaced away from the first post. The first post and the second post form a retention volume. The holder includes a first arm coupled to the first post and movable relative to the first post. The holder includes a second arm coupled to the second post and movable relative to the second post. The first arm and the second arm are movable between a first open position for positioning an elongate member in the retention volume, a closed position for enclosing the elongate member in the retention volume, and a second open position for removing the elongate member from the retention volume.

In an example, the disclosed bundling system includes a support platform and a plurality of holders coupled to the support platform. Each one of the holders includes a frame including a first post and a second post that is spaced away from the first post. The first post and the second post form a retention volume. Each one of the holders a first arm coupled to the first post and movable relative to the first post. Each one of the holders includes a second arm coupled to the second post and movable relative to the second post. One or more elongate members is positioned in the retention volume. The first arm and the second arm are movable between a first open position for positioning the one or more elongate members in the retention volume, a closed position for enclosing the one or more elongate member in the retention volume, and a second open position for removing the one or more elongate members from the retention volume.

In an example, the disclosed electrical raceway system includes a forming board, a plurality of holders, and a wire bundle. The plurality of holders is coupled to the forming board. Each one of the holders includes a frame including a first post and a second post that is spaced away from the first post. herein the first post and the second post form a retention volume. Each one of the holders includes a first arm coupled to the first post and movable relative to the first post. Each one of the holders includes a second arm coupled to the second post and movable relative to the second post. The wire bundle includes a plurality of wires and is positioned in the retention volume. The first arm and the second arm are movable between a first open position for positioning the wires in the retention volume, a closed position for enclosing the wires in the retention volume, and a second open position for removing the wires from the retention volume.

In an example, the disclosed method includes steps of: (1) coupling a holder to a support platform board; (2) positioning an elongate member on at least one of a first arm and a second arm of the holder; (3) applying a force on the elongate member to pivot at least one of the first arm and the second arm to a first open position relative to a first post and a second post of the holder and position the elongate member in a retention volume formed between the first post and the second post; and (4) pivoting the first arm and the second arm to a closed position relative to first post and the second post and enclose the elongate member in the retention volume between the first post and the second post.

Other examples of the holder, the systems, and the method will become apparent from the following detailed description, the accompanying drawings, and the appended claims.

### BRIEF DESCRIPTION OF THE DRAWINGS

Fig. 1 is a schematic block diagram of an example of a holder for a bundling system;
Fig. 2 is a flow diagram of an example of a method for assembling a bundle;
Fig. 3 is a schematic, front perspective view of an example of the holder;
Fig. 4 is a schematic, back perspective view of an example of the holder;
Fig. 5 is a schematic, top perspective view of an example of the holder;
Fig. 6 is a schematic, top plan view of an example of the holder;
Fig. 7 is a schematic illustration of an example of the holder, depicting a step of the method;
Fig. 8 is a schematic illustration of an example of the holder, depicting a step of the method;
Fig. 9 is a schematic illustration of an example of the holder, depicting a step of the method;
Fig. 10 is a schematic illustration of an example of the holder, depicting a step of the method;
Fig. 11 is a schematic illustration of an example of the holder, depicting a step of the method;
Fig. 12 is a schematic illustration of an example of the holder, depicting a step of the method;
Fig. 13 is a schematic illustration of an example of the holder, depicting a step of the method;
Fig. 14 is a schematic illustration of an example of the holder, depicting a step of the method;
Fig. 15 is a schematic illustration of an example of an aircraft; and
Fig. 16 is a flow diagram of an example of an aircraft manufacturing and service method.

### DETAILED DESCRIPTION

Generally, the following detailed description describes a non-flyaway holding device that captures and holds (e.g., autonomously or manually) routed individual wire segments of a wire raceway or wire harness with very little friction resistance. After all the wires have been routed and positioned in the holding device, the group of wires can be secured into a bundle and then be easily extracted as a larger group of wires. The holding device provides little or no resistance during extraction from the holding device. In various examples, the shape of the retention features of the holding device, along with counter-balanced weights and the pivot positions of movable arms allow for a near zero force placement of routed wire segments and removal of large wire groups. In other examples, the disclosed holding device can be used to hold various other types or kinds of elongate members during an assembly or joining operation.

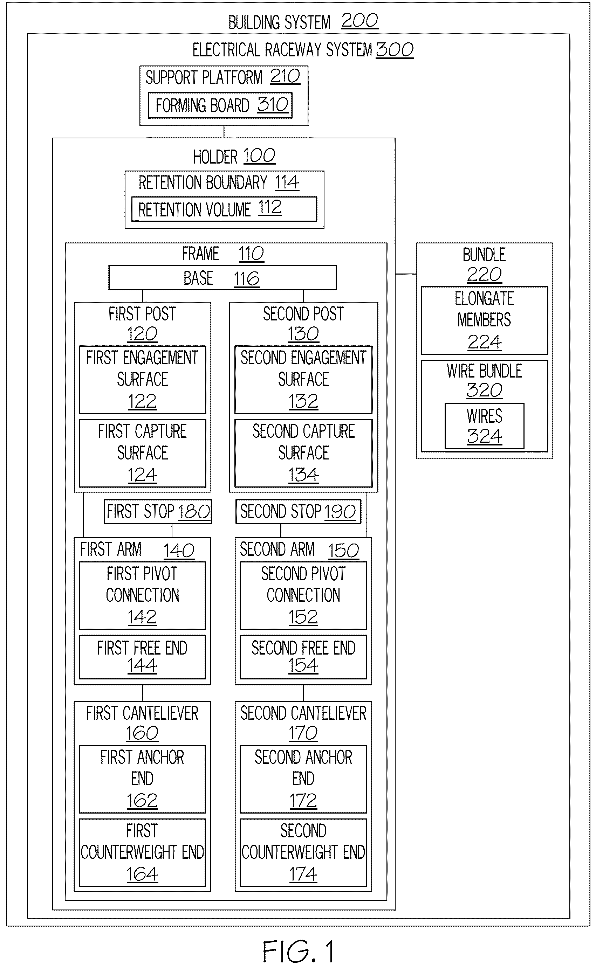

Referring now to Figs. 1 and 3-14 by way of examples, the present disclosure is directed to a holder 100 for supporting one or more elongate members 224. The following are examples of the holder 100, according to the present disclosure. Examples of the holder 100 include a number of elements, features, and components. Not all of the elements, features, and/or components described or illustrated in one example are required in that example. Some or all of the elements, features, and/or components described or illustrated in one example can be combined with other examples in various ways without the need to include other elements, features, and/or components described in those other examples, even though such combination or combinations are not explicitly described or illustrated by example herein.

Fig. 1 depicts one or more examples of the holder 100. As will be described in more detail herein, in one or more examples, the holder 100 includes a number of components, including one or more, or combinations, of a frame 110, a retention volume 112, a retention boundary 114, a base 116, a first post 120, a first engagement surface 122, a first capture surface 124, a second post 130, a second engagement surface 132, a second capture surface 134, a first arm 140, a first pivot connection, a first free end 144, a second arm 150, a second pivot connection 152, a second free end 154, a first cantilever 160, a first anchor end 162, a first counterweight end 164, a second cantilever 170, a second anchor end 172, a second counterweight end 174, a first stop 180, and a second stop 190.

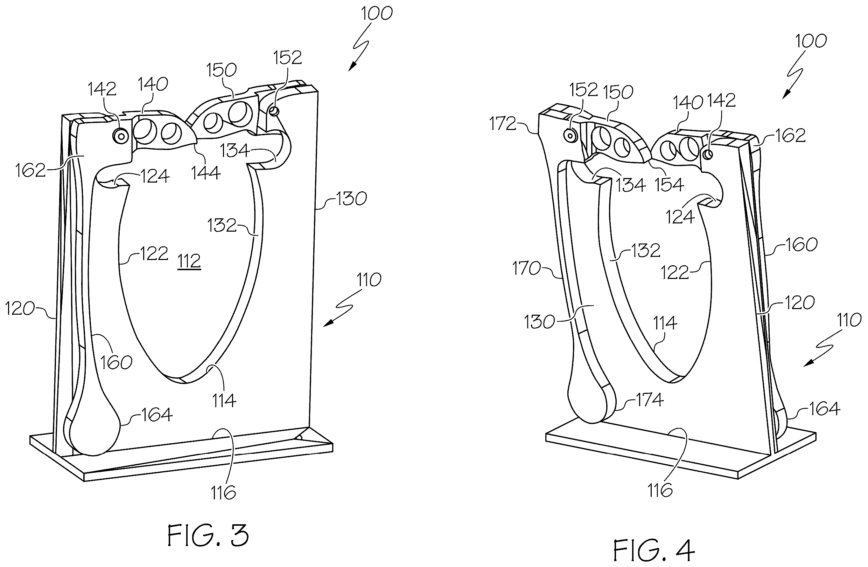

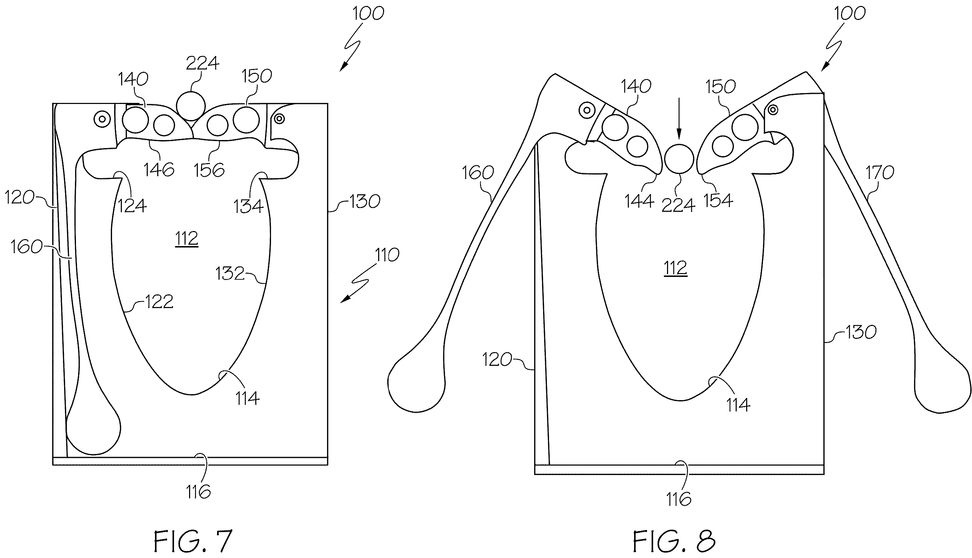

Figs. 3-6 depict various views of an example of the holder 100. Figs. 7-14 depict examples of the holder 100 at different stages of a supporting operation in which one or more elongate members 224 (e.g., wires 324) are held in position for a follow-on operation, such as a bundling operation, an assembly operation, a joining operation, and the like.

As illustrated in Figs. 1 and 3-14, in one or more examples, frame 110 includes or is partially formed by the first post 120 and the second post 130. The first post 120 and the second post 130 are spaced away from each other. The first post 120 and the second post 130 form the retention volume 112. In one or more examples, the first post 120 and the second post 130 are generally or at least approximately parallel to each other. In one or more examples, the first post 120 and the second post 130 are in a generally vertical or upright position. The first post 120 and the second post 130 can have any suitable size, shape, thickness, or other geometric characteristics.

As illustrated in Figs. 1 and 3-14, in one or more examples, the frame 110 includes or is partially formed by the base 116. In these examples, the first post 120 extends from the base 116. The second post 130 extends from the base 116. In one or more examples, the first post 120 and the second post 130 extend upwardly along a generally vertical direction from the base 116. In one or more examples, the base 116 is configured to be coupled or otherwise mounted to a support platform 210, such as a forming board 310 for assembling an electrical raceway.

As illustrated in Figs. 1 and 3-14, in one or more examples, the first arm 140 is coupled to the frame 110. In one or more examples, the first arm 140 is coupled to the first post 120. In one or more examples, the first arm 140 is coupled to an upper end of the first post 120. The first arm 140 is movable relative to the frame 110, such as relative to the first post 120. In one or more examples, the first arm 140 is inwardly (e.g., toward the base 116) or downwardly movable and outwardly (e.g., away from the base 116) or upwardly movable relative to the first post 120 between open and closed positions. The first arm 140 can have any suitable size, shape, thickness, or other geometric characteristics.

As illustrated in Figs. 1 and 3-14, in one or more examples, the second arm 150 is coupled to the frame 110. In one or more examples, the second arm 150 is coupled to the second post 130. In one or more examples, the second arm 150 is coupled to an upper end of the second post 130. The second arm 150 is movable relative to frame 110, such as the second post 130. In one or more examples, the second arm 150 is inwardly (e.g., toward the base 116) or downwardly movable and outwardly (e.g., away from the base 116) or upwardly movable relative to the second post 130 between open and closed positions. The second arm 150 can have any suitable size, shape, thickness, or other geometric characteristics.

As illustrated in Figs. 1 and 3-14, in one or more examples, the first arm 140 and the second arm 150 are movable relative to each other. In one or more examples, the first arm 140 and the second arm 150 are independently movable relative to each other. In one or more examples, the first arm 140 and the second arm 150 are approximately aligned with each other. In one or more examples, the first arm 140 extends away from the first post 120 toward the second post 130. In one or more examples, the second arm 150 extends away from the second post 130 toward the first post 120.

As illustrated in Figs. 7-14, the first arm 140 and the second arm 150 are movable to and between a first (e.g., inwardly or downwardly) open position (e.g., shown in Fig. 8) for positioning an elongate member 224 (e.g., any one of the elongate members 224) in the retention volume 112. The first arm 140 and the second arm 150 are movable to and between a closed position (e.g., shown in Figs. 7 and 9-12) for enclosing the elongate member 224 in the retention volume 112. The first arm 140 and the second arm 150 are movable to and between a second (e.g., outwardly or upwardly) open position for removing the elongate member 224 or a bundle 220 of the elongate members 224 from the retention volume 112.

As illustrated in Figs. 8, 13 and 14, in one or more examples, the first arm 140 is pivotal relative to the first post 120 between the closed position, the first open position, and the second open position. In one or more examples, the second arm 150 is pivotal relative to the second post 130 between the closed position, the first open position, and the second open position. Pivotal motion of the first arm 140 and the second arm 150 relative to the first post 120 and the second post 130, respectively, facilitates easy insertion of one or more of the elongate members 224 into the retention volume 112 and easy removal of one or more of the elongate members 224 from the retention volume 112 during the support, bundling, assembly, or joining operation.

In one or more examples, the first arm 140 and the second arm 150 are biased in the closed position (e.g., Figs. 7 and 9-12). Biasing the first arm 140 and the second arm 150 in the closed position keeps the retention volume 112 enclosed and retains the elongate members 224 bound within the retention volume 112 by the first post 120, the second post 130, the first arm 140, and the second arm 150. Biasing the first arm 140 and the second arm 150 in the closed position also enables the first pivot connection 142 between the first arm 140 and the first post 120 and the second pivot connection 152 between the second arm 150 and the second post 130 to be very low friction.

As illustrated in Figs. 1 and 3-14, in one or more examples, the first arm 140 incudes the first free end 144. The second arm 150 includes the second free end 154. The first free end 144 and the second free end 154 overlap when the first arm 140 and the second arm 150 are in the closed position. Overlap of portions of the first free end 144 and the second free end 154 fully enclose the retention boundary 114 forming the retention volume 112.

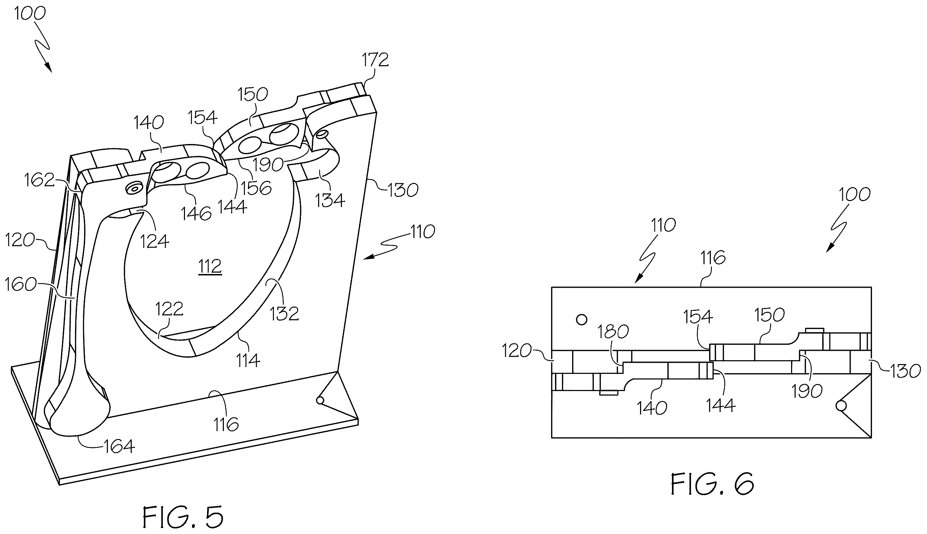

As illustrated in Figs. 5 and 6, in one or more examples, the first stop 180 extends from the first arm 140. The first stop 180 is configured to limit pivotal movement of the first arm 140 relative to the first post 120 in a first direction. In one or more examples, the first stop 180 limits downward pivotal movement of the first arm 140 relative to the first post 120 in a downward direction, for example, from the closed position to the first open position. Limiting pivotal movement of the first arm 140 in the downward direction prevents overtravel of the first arm 140 and facilitates the biasing (e.g., passive return) of the first arm 140 to the closed position. In one or more examples, the first stop 180 is configured to contact the first post 120. Contact between the first stop 180 and first post 120 provides physical interference that prevents further pivotal movement of the first arm 140. In one or more examples, the first stop 180 extends or protrudes outwardly from a surface of the first arm 140.

As illustrated in Figs. 5 and 6, in one or more examples, the second stop 190 extends from the second arm 150. The second stop 190 is configured to limit pivotal movement of the second arm 150 relative to the second post 130 in a second direction. In one or more examples, the second stop 190 limits downward pivotal movement of the second arm 150 relative to the second post 130 in a downward direction, for example, form the closed position to the first open position. Limiting pivotal movement of the second arm 150 in the downward direction prevents overtravel of the second arm 150 and facilitates the biasing (e.g., passive return) of the second arm 150 to the closed position. In one or more examples, the second stop 190 is configured to contact the second post 130. Contact between the second stop 190 and second post 130 provides physical interference that prevents further pivotal movement of the second arm 150. In one or more examples, the second stop 190 extends or protrudes outwardly from a surface of the second arm 150.

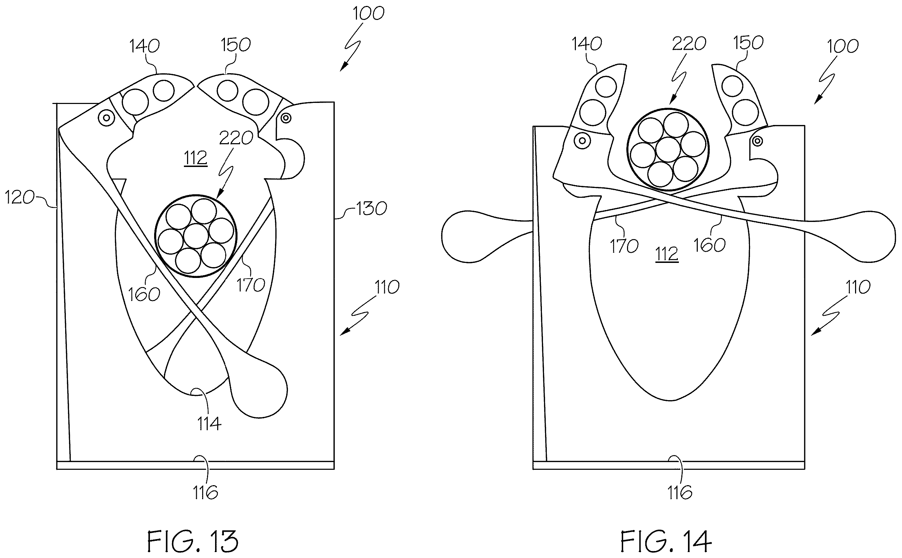

As illustrated in Figs. 1 and 3-14, in one or more examples, the first cantilever 160 is coupled to or otherwise extends from the first arm 140. The first cantilever 160 is configured to bias the first arm 140 in the closed position (e.g., Figs. 3-7 and 9-12). The first cantilever 160 allows the first arm 140 to pivot (e.g., upwardly and downwardly) between the closed position and the first open position (e.g., Fig. 8) and between the closed position and the second open position (e.g., Figs. 13 and 14).

As illustrated in Figs. 1 and 3-14, in one or more examples, the second cantilever 170 is coupled to or otherwise extends from the second arm 150. The second cantilever 170 is configured to bias the second arm 150 in the closed position (e.g., Figs. 3-7 and 9-12). The second cantilever 170 allows the second arm 150 to pivot (e.g., upwardly and downwardly) between the closed position and the first open position (e.g., Fig. 8) and between the closed position and the second open position (e.g., Figs. 13 and 14).

As illustrated in Figs. 1, 3, 5 and 7-14, in one or more examples, the first cantilever 160 includes the first anchor end 162 and the first counterweight end 164. The first anchor end 162 is coupled to the first arm 140. As an example, the first anchor end 162 is coupled to an end of the first arm 140 opposite the first free end 144 of the first arm 140. The first counterweight end 164 is spaced away from and is opposite the first anchor end 162 along the body of the first cantilever 160.

As illustrated in Figs. 1, 4, 8, 13 and 14, in one or more examples, the second cantilever 170 includes the second anchor end 172 and the second counterweight end 174. The second anchor end 172 is coupled to the second arm 150. As an example, the second anchor end 172 is coupled to an end of the second arm 150 opposite the second free end 154 of the second arm 150. The second counterweight end 174 is spaced away from and is opposite the second anchor end 172 along the body of the second cantilever 170.

The first cantilever 160 and the second cantilever 170 provide counterweights that offset gravitational force acting on the first arm 140 and the second arm 150, respectively, thereby reducing the amount of force required to move (e.g., pivot) the first arm 140 and the second arm 150 during insertion of the elongate member 224 (e.g., wire 324) and removal of the group of elongate members 224 (e.g., group of wires 324). Counterbalancing the first arm 140 and the second arm 150 with the first cantilever 160 and the second cantilever 170 also provides consistent positioning of the first arm 140 and the second arm 150 and return to the closed position. Counterbalancing the first arm 140 and the second arm 150 with the first cantilever 160 and the second cantilever 170 also reduces the strain on the elongate member 224 during insertion in the retention volume 112 and removal from the retention volume 112.

As illustrated in Figs. 3-14, in one or more examples, the first pivot connection 142 is positioned between the first arm 140 and the first post 120. The first pivot connection 142 enables pivotal movement of the first arm 140 relative to the first post 120. The second pivot connection 152 between the second arm 150 and the second post 130. The second pivot connection 152 enables pivotal movement of the second arm 150 relative to the second post 130. Generally, the first pivot connection 142 and the second pivot connection 152 are low friction connections that enable near resistance free pivotal movement of the first arm 140 and the second arm 150.

As illustrated in Figs. 3-14, in one or more examples, the first counterweight end 164 is spaced away from and is opposite to the first pivot connection 142. In one or more examples, the first counterweight end 164 is approximately aligned along a vertical direction with the first pivot connection 142 when the first arm 140 is in the closed position. Approximate alignment of the first counterweight end 164 below the first pivot connection 142 enables the first counterweight end 164 to bring (e.g., bias) the first arm 140 back to the closed position due to gravity.

As illustrated in Figs. 3-14, in one or more examples, the second counterweight end 174 is spaced away from and is opposite to the second pivot connection 152. In one or more examples, the second counterweight end 174 is approximately aligned along a vertical direction with the second pivot connection 152 when the second arm 150 is in the closed position. Approximate alignment of the second counterweight end 174 below the second pivot connection 152 enables the second counterweight end 174 to bring (e.g., bias) the second arm 150 back to the closed position due to gravity.

As illustrated in Figs. 1 and 3-14, in one or more examples, the first post 120 includes the first engagement surface 122. The second post 130 includes the second engagement surface 132. The first engagement surface 122 and the second engagement surface 132 face each other to form a portion of the retention boundary 114 of the retention volume 112. In these examples, the retention boundary 114 is formed by the first engagement surface 122, the second engagement surface 132, a first arm surface 146 of the first arm 140, and a second arm surface 156 of the second arm 150 (e.g., Fig. 7).

As illustrated in Figs. 3-14, in one or more examples, the first engagement surface 122 is a concave surface. In one or more examples, the second engagement surface 132 is a concave surface. In other examples, the first engagement surface 122 and/or the second engagement surface 132 can have any suitable shape or other geometric characteristics. As examples, the first engagement surface 122 and/or the second engagement surface 132 can be straight, can be curved, can have straight sections, can have curved sections, can have various radii of curvature, etc. Generally, the first engagement surface 122 and/or the second engagement surface 132 provide a support surface for collection of the elongate members 224 (e.g., wires 324).

As illustrated in Figs. 1 and 3-5 and 7-14, in one or more example, the first post 120 includes the first capture surface 124. The first capture surface 124 extends from the first engagement surface 122. The first capture surface 124 forms a portion of the retention boundary 114 of the retention volume 112. In one or more example, the second post 130 includes the second capture surface 134. The second capture surface 134 extends from the second engagement surface 132. The second capture surface 134 forms a portion of the retention boundary 114 of the retention volume 112. In these examples, the retention boundary 114 is formed by the second engagement surface 132, the first capture surface 124, the second engagement surface 132, the second capture surface 134, the first arm surface 146 of the first arm 140, and the second arm surface 156 of the second arm 150 (e.g., Fig. 7).

In one or more examples, the first capture surface 124 and/or the second capture surface 134 can have any suitable shape or other geometric characteristics. As examples, the first capture surface 124 and/or the second capture surface 134 can be straight, can be curved, can have straight sections, can have curved sections, can have various radius of curvature, etc. Generally, the first capture surface 124 and/or the second capture surface 134 provide a support surface for temporarily holding or segregating one of the elongate members 224 (e.g., one of the wires 324). As an example, the first capture surface 124 forms a first notch in the first post 120 and the second capture surface 134 forms a second notch in the second post 130 configured to hold the elongate member 224 (e.g., wire 324), such as to form a breakout from the remaining collection of elongate members 224 (e.g., wires 324) retained within the retention volume 112 and supported in the first engagement surface 122 and the second engagement surface 132.

Referring now to Figs. 1 and 3-14 by way of examples, the present disclosure is directed to a bundling system 200 for supporting and/or bundling one or more elongate members 224. The following are examples of the bundling system 200, according to the present disclosure. Examples of the bundling system 200 include a number of elements, features, and components. Not all of the elements, features, and/or components described or illustrated in one example are required in that example. Some or all of the elements, features, and/or components described or illustrated in one example can be combined with other examples in various ways without the need to include other elements, features, and/or components described in those other examples, even though such combination or combinations are not explicitly described or illustrated by example herein.

Fig. 1 also depicts one or more examples of the bundling system 200. In various examples, the bundling system 200 is configured for supporting, bundling, assembling, or joining one or more elongate members 224. Examples of the elongate members 224 include, but are not limited to, bars, tubes, pipes, cables, cords, strands, lines, filaments, fibers, wires, hoses, shafts, and the like. In one or more examples, the bundling system 200 includes a number of components, including one or more, or combinations, of the support platform 210, the holder 100, the frame 110, the retention volume 112, the retention boundary 114, the base 116, the first post 120 the first engagement surface 122, the first capture surface 124, the second post 130, the second engagement surface 132, the second capture surface 134, the first arm 140, the first pivot connection, the first free end 144, the second arm 150, the second pivot connection 152, the second free end 154, the first cantilever 160, the first anchor end 162, the first counterweight end 164, the second cantilever 170, the second anchor end 172, the second counterweight end 174, the first stop 180, and the second stop 190.

In one or more examples of the bundling system 200, the support platform 210 includes any one of various types of work surfaces configured to support components during assembly. The support platform 210 can be a generic workbench or a specialty designed tool or jig. In one or more examples, at least one holder 100 is coupled to a work surface of the support platform 210. In one or more examples, a plurality of holders 100 is coupled to the support platform 210 and are spaced apart from each other to hold the elongate member 224. In one or more examples, the frame 110 of the holder includes the first post 120 and the second post 130 that is spaced away from the first post 120. The first post 120 and the second post 130 form a portion of the retention volume 112. The first arm 140 is coupled to the first post 120 and is movable relative to the first post 120. The second arm 150 coupled to the second post 130 and is movable relative to the second post 130. In one or more examples, the elongate member 224 is positioned within the retention volume 112. In one or more examples, a plurality of the elongate members 224 is positioned in the retention volume 112 to form the bundle 220. The first arm 140 and the second arm 150 are movable between the first open position for positioning the elongate members 224 in the retention volume 112, the closed position for enclosing the elongate members 224 in the retention volume 112, and the second open position for removing the elongate members 224 from the retention volume 112. In one or more examples, the first cantilever 160 extends from the first arm 140 and is configured to bias the first arm 140 in the closed position. The second cantilever 170 extends from the second arm 150 and is configured to bias the second arm 150 in the closed position.

Fig. 1 further depicts one or more examples of the electrical raceway system 300. In various examples, the electrical raceway system 300 is configured for supporting an electrical raceway and/or bundling a plurality of wires 324 to form a wire bundle 320. In one or more examples, the electrical raceway system 300 includes a number of components, including one or more, or combinations, of the forming board 310, the holder 100, the frame 110, the retention volume 112, the retention boundary 114, the base 116, the first post 120 the first engagement surface 122, the first capture surface 124, the second post 130, the second engagement surface 132, the second capture surface 134, the first arm 140, the first pivot connection, the first free end 144, the second arm 150, the second pivot connection 152, the second free end 154, the first cantilever 160, the first anchor end 162, the first counterweight end 164, the second cantilever 170, the second anchor end 172, the second counterweight end 174, the first stop 180, and the second stop 190.

In one or more examples of the electrical raceway system 300, the forming board 310 includes tool or platform used to facilitate the organized assembly, layout, and routing of wire raceways, conduit paths, or cable trays for wiring systems, such as those used in aircraft. In one or more examples, at least one holder 100 is coupled to a work surface of the forming board 310. In one or more examples, a plurality of holders 100 is coupled to the forming board 310 and are spaced apart from each other to hold the wires 324 of electrical raceway. In one or more examples, the frame 110 of the holder includes the first post 120 and the second post 130 that is spaced away from the first post 120. The first post 120 and the second post 130 form a portion of the retention volume 112. The first arm 140 is coupled to the first post 120 and is movable relative to the first post 120. The second arm 150 coupled to the second post 130 and is movable relative to the second post 130. In one or more examples, the wires 324 are positioned (e.g., one at a time or in groups or sets) within the retention volume 112. In one or more examples, a plurality of the wires 324 is positioned in the retention volume 112 to form the wire bundle 320. The first arm 140 and the second arm 150 are movable between the first open position for positioning the wires 324 in the retention volume 112, the closed position for enclosing the wires 324 in the retention volume 112, and the second open position for removing the wires 324 (e.g., in the form of the wire bundle 320) from the retention volume 112. In one or more examples, the first cantilever 160 extends from the first arm 140 and is configured to bias the first arm 140 in the closed position. The second cantilever 170 extends from the second arm 150 and is configured to bias the second arm 150 in the closed position.

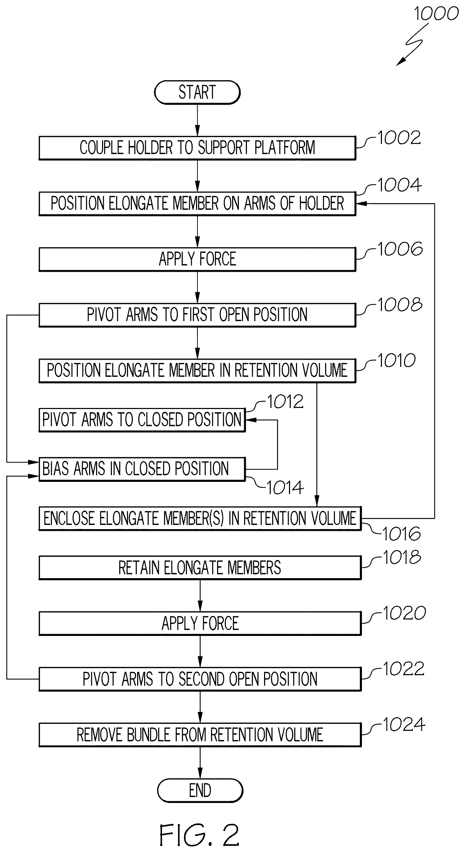

Referring now to Fig. 2, by way of examples, present disclosure is also directed to a method 1000 for supporting the elongate member 224 (e.g., wire 324) and/or bundling the elongate members 224 (e.g., wires 324) to form the bundle 220 (e.g., wire bundle 320) or another assembled or joined group of elongate members 224. The following are examples of the method 1000, according to the present disclosure. In one or more examples, the method 1000 is implemented using the holder 100 (Figs. 1 and 3-14). Examples of the method 1000 include a number of elements, steps, operations, or processes. Not all of the elements, steps, operations, or processes described or illustrated in one example are required in that example. Some or all of the elements, steps, operations, or processes described or illustrated in one example can be combined with other examples in various ways without the need to include other elements, steps, operations, or processes described in those other examples, even though such combination or combinations are not explicitly described or illustrated by example herein.

In one or more examples, the method 1000 includes a step of coupling 1002 the holder 100 to the support platform 210. In one or more examples, the support platform 210 is the forming board 310 for forming the electrical raceway. In one or more examples, a plurality of the holders 100 are coupled to and positioned along the support platform 210 (e.g., forming board 310) as needed to support the elongate members 224 (e.g., wires 324) during bundling or assembly.

In one or more example, the method 1000 includes a step of positioning 1004 the elongate member 224 (e.g., one of the plurality of elongate members 224) on at least one of the first arm 140 and the second arm 150 of the holder 100 (e.g., Fig. 7).

In one or more examples, the method 1000 includes a step of applying 1006 a force (e.g., an inward or downward force) on the elongate member 224 and, thus, to the first arm 140 and/or the second arm 150, and a step of pivoting 1008 (e.g., inwardly or downwardly) at least one of the first arm 140 and the second arm 150 to the first open position (e.g., Fig. 8) relative to the first post 120 and the second post 130 of the holder 100.

In one or more examples, the holder 100 is coupled to the support platform 210 such that the holder 100 is in a generally upright or vertical orientation. In these examples, the force applied to the first arm 140 and the second arm 150 is a generally downward force that pivots the first arm 140 and the second arm 150 in the inward direction. In one or more examples, the holder 100 is coupled to the support platform 210 such that the holder 100 is in a generally sideways or horizontal orientation. In these examples, the force applied to the first arm 140 and the second arm 150 is a generally sideways or lateral force that pivots the first arm 140 and the second arm 150 in the inward direction.

In one or more examples, the method 1000 includes a step of limiting pivotal movement of the first arm 140 and the second arm 150 in the first (e.g., downwardly) open position. Downward pivotal movement of the first arm 140 is limited by the first stop 180, which extends outwardly from the first arm 140, contacting the first post 120. Downward pivotal movement of the second arm 150 is limited by the second stop 190, which extends outwardly from the second arm 150, contacting the second post 130.

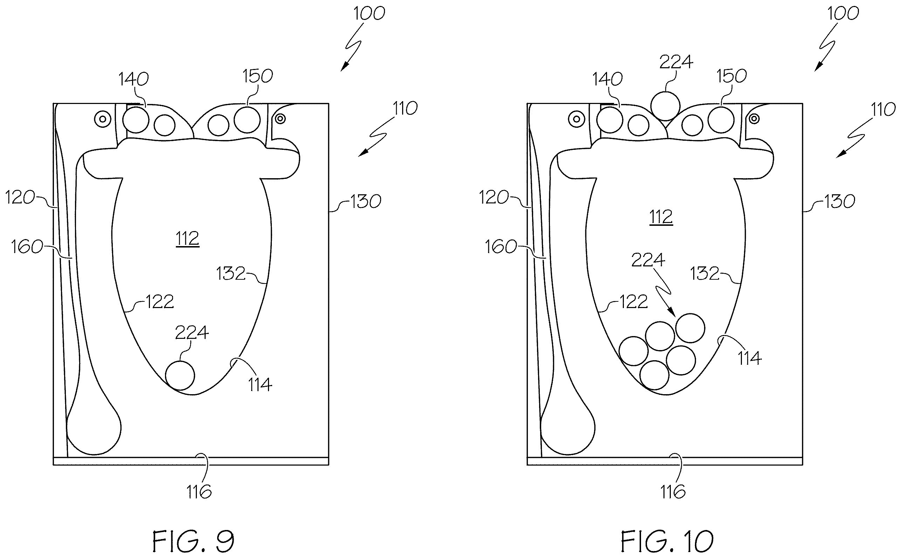

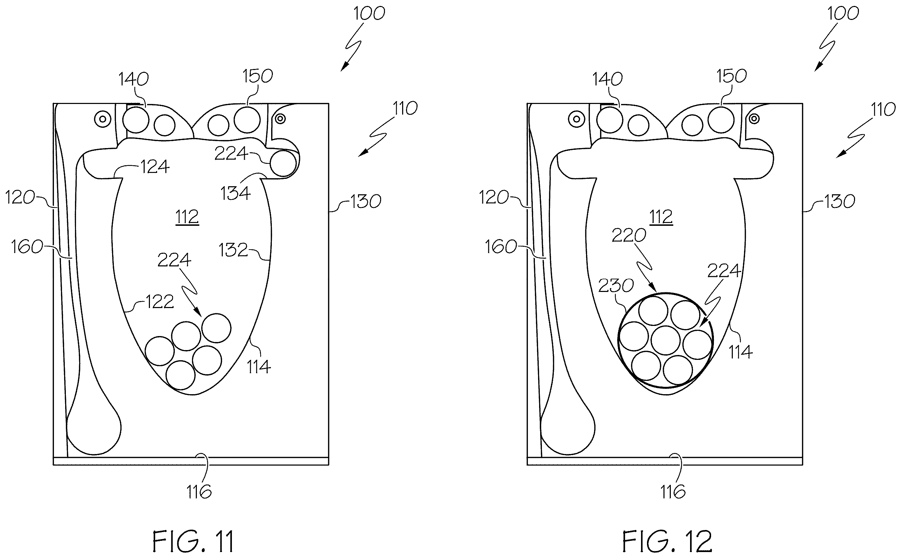

In one or more examples, the method 1000 includes a step of positioning 1010 the elongate member 224 in the retention volume 112 formed between the first post 120 and the second post 130 (e.g., Figs. 9-12). In one or more examples, the elongate member 224 is supported by the first engagement surface 122 of the first post 120 and/or the second engagement surface 132 of the second post 130 forming the retention boundary 114 (e.g., Figs. 9 and 10). In one or more examples, the elongate member 224 is supported by the first capture surface 124 of the first post 120 or the second capture surface 134 of the second post 130 forming the retention boundary 114 (e.g., Fig. 11).

In one or more examples, the method 1000 includes a step of pivoting 1012 the first arm 140 and the second arm 150 to the closed position relative to first post 120 and the second post 130 (e.g., Fig. 12). In one or more examples, the first arm 140 and the second arm 150 are biased in the closed position.

In one or more examples, the method 1000 includes a step of biasing 1014 the first arm 140 and the second arm 150 to the closed position. The first arm 140 and the second arm 150 are biased in the closed position using the first cantilever 160 extending from the first arm 140 and the second cantilever 170 extending from the second arm 150.

In one or more examples, the method 1000 includes a step of enclosing 1016 the elongate member 224 in the retention volume 112 between the first post 120, the second post 130, the first arm 140, and the second arm 150.

In one or more examples of the method 1000, the elongate member 224 is one of a plurality of the elongate members 224. The operational steps of the method 1000 described above are repeated to include a step of positioning the elongate members 224 within the retention volume 112 between the first post 120 and the second post 130.

In one or more examples, the method 1000 includes a step of retaining 1018 the elongate members 224, for example, with a fastener 230 to form the bundle 220, within the retention volume 112 (e.g., Fig. 12). In one or more examples, the bundle 220 is the wire bundle 320 of the electrical raceway and is fastened as a bundle by straps.

In one or more examples, the method 1000 includes a step of applying 1020 a force (e.g., an opposing outward or upward force) on the bundle 220 and, thus, to the first arm 140 and the second arm 150, and a step of pivoting 1022 (e.g., outwardly or upwardly) the first arm 140 and the second arm 150 to the second open position relative to the first post 120 and the second post 130 (e.g., Fig. 13).

In one or more examples, the method 1000 includes a step of removing 1024 the bundle 220 from the retention volume 112 between the first post 120 and the second post 130 and through the first arm 140 and the second arm 150 in the second open position (e.g., Fig. 14).

In one or more examples, the first arm 140 and the second arm 150 are biased in the closed position and pivot (return) back to the closed position after removing the bundle 220 from the retention volume 112.

In one or more examples, the method 1000 is performed manually. As an example, the elongate member 224 (e.g., wire 324) is positioned and force is applied during insertion and removal by hand. In other examples, the method 1000 is performed automatically. As an example, the elongate member 224 (e.g., wire 324) is positioned and force is applied during insertion and removal by automated robot motion control.

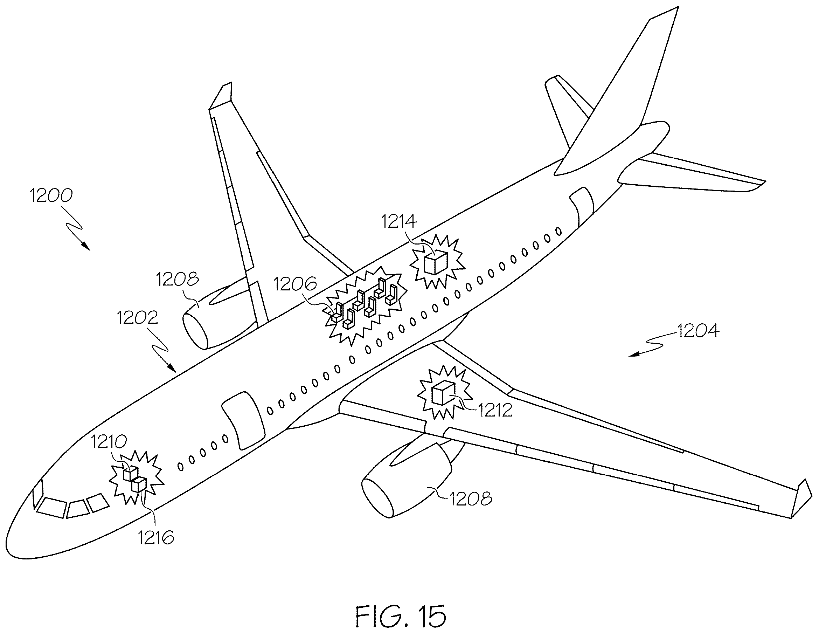

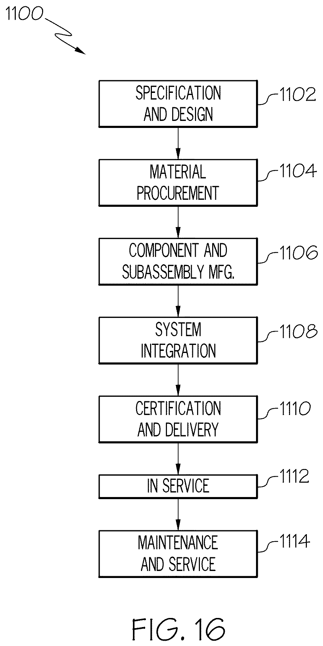

Referring now to Figs. 15 and 16 examples of the holder 100, the bundling system 200, the electrical raceway system 300, and the method 1000, described herein, may be related to, or used in the context of, an aircraft 1200, as schematically illustrated in Fig. 15, and the aerospace manufacturing and service method 1100, as shown in the flow diagram of Fig. 16. As an example, the aircraft 1200 and/or the manufacturing and service method 1100 may utilize bundles of wire, cable, fiber, tubing, pipe, and the like that are assembled using the holder 100 and/or according to the method 1000.

Referring to Fig. 15, which illustrates an example of the aircraft 1200. The aircraft 1200 can be any aerospace vehicle or platform. In one or more examples, the aircraft 1200 includes the airframe 1202 having the interior 1206. The aircraft 1200 includes a plurality of onboard systems 1204 (e.g., high-level systems). Examples of the onboard systems 1204 of the aircraft 1200 include propulsion systems 1208, hydraulic systems 1212, electrical systems 1210, and environmental systems 1214. In other examples, the onboard systems 1204 also includes one or more control systems coupled to the airframe 1202 of the aircraft 1200. In yet other examples, the onboard systems 1204 also include one or more other systems 1216, such as, but not limited to, communications systems, avionics systems, software distribution systems, network communications systems, passenger information/entertainment systems, guidance systems, radar systems, weapons systems, and the like. The aircraft 1200 can include bundles 220 of elongate members 224 (e.g., wire, cable, fiber, tubing, pipe, and the like) or electrical raceway systems 300 that are assembled using the holder 100 and/or according to the method 1000.

Referring to Fig. 16, during pre-production of the aircraft 1200, the manufacturing and service method 1100 includes specification and design 1102 of the aircraft 1200 and material procurement 1104. During production of the aircraft 1200, component and subassembly manufacturing 1106 and system integration 1108 of the aircraft 1200 take place. Thereafter, the aircraft 1200 goes through certification and delivery 1110 to be placed in service 1112. Routine maintenance and service 1114 includes modification, reconfiguration, refurbishment, etc. of one or more systems of the aircraft 1200.

Each of the processes of the manufacturing and service method 1100 illustrated in Fig. 16 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

Examples of the holder 100, bundling systems 200, electrical raceway systems 300, and method 1000, shown and described herein, may be employed during any one or more of the stages of the manufacturing and service method 1100 shown in the flow diagram illustrated by Fig. 16. In an example, material bundles (e.g., wire bundles 320 or electrical raceway systems 300) of the aircraft 1200 can be manufactured using the holder 100 and/or according to the method 1000 during a portion of component and subassembly manufacturing 1106 and/or system integration 1108. Further, material bundles (e.g., wire bundles 320 or electrical raceway systems 300) of the aircraft 1200 can be manufactured using the holder 100 and/or according to the method 1000 while the aircraft 1200 is in service 1112. Also, material bundles (e.g., wire bundles 320 or electrical raceway systems 300) of the aircraft 1200 can be manufactured using the holder 100 and/or according to the method 1000 during system integration 1108 and certification and delivery 1110. Similarly, material bundles (e.g., wire bundles 320 or electrical raceway systems 300) of the aircraft 1200 can be manufactured using the holder 100 and/or according to the method 1000 while the aircraft 1200 is in service 1112 and during maintenance and service 1114.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1 and 3-15, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1 and 3-15, referred to above, need to be included in every example and not all elements, features, and/or components described herein are necessarily depicted in each illustrative example. Accordingly, some of the elements, features, and/or components described and illustrated in Figs. 1 and 3-15 may be combined in various ways without the need to include other features described and illustrated in Figs. 1 and 3-15, other drawing figures, and/or the accompanying disclosure, even though such combination or combinations are not explicitly illustrated herein. Similarly, additional features not limited to the examples presented, may be combined with some or all of the features shown and described herein. Unless otherwise explicitly stated, the schematic illustrations of the examples depicted in Figs. 1 and 3-15, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1 and 3-15, and such elements, features, and/or components may not be discussed in detail herein with reference to each of Figs. 1 and 3-15. Similarly, all elements, features, and/or components may not be labeled in each of Figs. 1 and 3-15, but reference numerals associated therewith may be utilized herein for consistency.

In Figs. 2 and 16, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 2 and 16 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need to be performed.

Further, references throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the holder 100, the bundling system 200, the electrical raceway system 300, and the method 1000 have been shown and described, modifications may occur to those skilled in the art upon reading the specification. The present application includes such modifications and is limited only by the scope of the claims.

The description includes the following clauses:
1. A holder comprising:
   a frame comprising a first post and a second post that is spaced away from the first post, wherein the first post and the second post form a retention volume;
   a first arm coupled to the first post and movable relative to the first post; and
   a second arm coupled to the second post and movable relative to the second post,
   wherein the first arm and the second arm are movable between a first open position for positioning an elongate member in the retention volume, a closed position for enclosing the elongate member in the retention volume, and a second open position for removing the elongate member from the retention volume.
2. The holder of Clause 1, wherein the first arm and the second arm are biased in the closed position.
3. The holder of Clause 1 or Clause 2, wherein at least one of:
   the first arm is pivotal relative to the first post between the closed position, the first open position, and the second open position; and
   the second arm is pivotal relative to the second post between the closed position, the first open position, and the second open position.
4. The holder of Clause 3, further comprising at least one of:
   a first stop extending from the first arm and configured to limit pivotal movement of the first arm relative to the first post in a first direction in the first open position; and
   a second stop extending from the second arm and configured to limit pivotal movement of the second arm relative to the second post in a second direction in the first open position.
5. The holder of Clause 3 or Clause 4, wherein at least one of:
   the first stop is configured to contact the first post; and
   the second stop is configured to contact the second post.
6. The holder of any preceding Clause, further comprising at least one of:
   a first cantilever extending from the first arm and configured to bias the first arm in the closed position; and
   a second cantilever extending from the second arm and configured to bias the second arm in the closed position.
7. The holder of Clause 6, wherein at least one of:
   the first cantilever comprises a first anchor end coupled to the first arm and a first counterweight end opposite the first anchor end; and
   the second cantilever comprises a second anchor end coupled to the second arm and a second counterweight end opposite the second anchor end.
8. The holder of Clause 7, further comprising:
   a first pivot connection between the first arm and the first post; and
   a second pivot connection between the second arm and the second post,
   wherein:
      the first counterweight end is aligned with the first pivot connection when the first arm is in the closed position; and
      the second counterweight end is aligned with the second pivot connection when the second arm is in the closed position.
9. The holder of any preceding Clause, wherein:
   the first post comprises a first engagement surface;
   the second post comprises a second engagement surface; and
   the first engagement surface and the second engagement surface face each other to form a portion of a retention boundary of the retention volume.
10. The holder of Clause 9, wherein at least one of:
   the first engagement surface is a concave surface; and
   the second engagement surface is a concave surface.
11. The holder of Clause 9 or Clause 10, wherein at least one of:
   the first post comprises a first capture surface extending from the first engagement surface and forming a portion of the retention boundary of the retention volume; and
   the second post comprises a second capture surface extending from the second engagement surface and forming a portion of the retention boundary of the retention volume.
12. The holder of any preceding Clause, wherein:
   the first arm comprises a first free end;
   the second arm comprises a second free end; and
   the first free end and the second free end overlap when the first arm and the second arm are in the closed position.
13. The holder of any preceding Clause, wherein:
   the frame further comprises a base;
   the first post extends from the base;
   the second post extends from the base.
14. An electrical raceway system comprising:
   a forming board;
   a plurality of holders coupled to the forming board, each one of the holders comprising:
      a frame comprising a first post and a second post that is spaced away from the first post, wherein the first post and the second post form a retention volume;
      a first arm coupled to the first post and movable relative to the first post; and
      a second arm coupled to the second post and movable relative to the second post; and
   a wire bundle, comprising a plurality of wires, positioned in the retention volume,
   wherein the first arm and the second arm are movable between a first open position for positioning the wires in the retention volume, a closed position for enclosing the wires in the retention volume, and a second open position for removing the wires from the retention volume.
14A. An electrical raceway system comprising:
   a forming board;
   a plurality of holders, each holder comprising the holder of any of Clauses 1 to 13, the plurality of holders coupled to the forming board; and
   a wire bundle, comprising a plurality of wires, positioned in the retention volume,
   wherein the first arm and the second arm are movable between a first open position for positioning the wires in the retention volume, a closed position for enclosing the wires in the retention volume, and a second open position for removing the wires from the retention volume.
15. The electrical raceway system of Clause 14 or Clause 14A, wherein each one of the holders further comprises at least one of:
   a first cantilever extending from the first arm and configured to bias the first arm in the closed position; and
   a second cantilever extending from the second arm and configured to bias the second arm in the closed position.
16. A method for supporting an elongate member, the method comprising:
   coupling a holder to a support platform;
   positioning the elongate member on at least one of a first arm and a second arm of the holder;
   applying a downward force on the elongate member to downwardly pivot at least one of the first arm and the second arm to a first open position relative to a first post and a second post of the holder and to position the elongate member in a retention volume formed between the first post and the second post; and
   pivoting the first arm and the second arm to a closed position relative to first post and the second post; and
   enclosing the elongate member in the retention volume between the first post, the second post, the first arm, and the second arm.
16A. A method for supporting an elongate member, the method comprising:
   coupling the holder of any of Clauses 1 to 13 to a support platform;
   positioning the elongate member on at least one of a first arm and a second arm of the holder;
   applying a downward force on the elongate member to downwardly pivot at least one of the first arm and the second arm to a first open position relative to a first post and a second post of the holder and to position the elongate member in a retention volume formed between the first post and the second post; and
   pivoting the first arm and the second arm to a closed position relative to first post and the second post; and
   enclosing the elongate member in the retention volume between the first post, the second post, the first arm, and the second arm.
17. The method of Clause 16 or Clause 16A, further comprising biasing the first arm and the second arm to the closed position using a first cantilever extending from the first arm and a second cantilever extending from the second arm.
18. The method of any of Clauses 16 to 17, further comprising limiting pivotal movement of the first arm and the second arm in the first open position using a first stop extending from the first arm and a second stop extending from the second arm.
19. The method of any of Clauses 16 to 18, wherein the elongate member is one of a plurality of elongate members and the method further comprises:
   positioning the elongate members within the retention volume between the first post and the second post; and
   retaining the elongate members with a fastener to form a bundle within the retention volume.
20. The method of Clause 19, further comprising applying an upward force on the bundle to upwardly pivot the first arm and the second arm to a second open position relative to the first post and the second post and to remove the bundle from the retention volume between the first post and the second post.

## Claims

1. A holder (100) comprising:
a frame (110) comprising a first post (120) and a second post (130) that is spaced away from the first post (120), wherein the first post (120) and the second post (130) form a retention volume (112);
a first arm (140) coupled to the first post (120) and movable relative to the first post (120); and
a second arm (150) coupled to the second post (130) and movable relative to the second post (130),
wherein the first arm (140) and the second arm (150) are movable between a first open position for positioning an elongate member (224) in the retention volume (112), a closed position for enclosing the elongate member (224) in the retention volume (112), and a second open position for removing the elongate member (224) from the retention volume (112).

2. The holder (100) of Claim 1, wherein the first arm (140) and the second arm (150) are biased in the closed position.

3. The holder (100) of Claim 1 or Claim 2, wherein at least one of:
the first arm (140) is pivotal relative to the first post (120) between the closed position, the first open position, and the second open position; and
the second arm (150) is pivotal relative to the second post (130) between the closed position, the first open position, and the second open position.

4. The holder (100) of Claim 3, further comprising at least one of:
a first stop (180) extending from the first arm (140) and configured to limit pivotal movement of the first arm (140) relative to the first post (120) in a first direction in the first open position; and
a second stop (190) extending from the second arm (150) and configured to limit pivotal movement of the second arm (150) relative to the second post (130) in a second direction in the first open position.

5. The holder (100) of Claim 3 or Claim 4, wherein at least one of:
the first stop (180) is configured to contact the first post (120); and
the second stop (190) is configured to contact the second post (130).

6. The holder (100) of any preceding Claim, further comprising at least one of:
a first cantilever (160) extending from the first arm (140) and configured to bias the first arm (140) in the closed position; and
a second cantilever (170) extending from the second arm (150) and configured to bias the second arm (150) in the closed position.

7. The holder (100) of Claim 6, wherein at least one of:
the first cantilever (160) comprises a first anchor end (162) coupled to the first arm (140) and a first counterweight end (164) opposite the first anchor end (162); and
the second cantilever (170) comprises a second anchor end (172) coupled to the second arm (150) and a second counterweight end (174) opposite the second anchor end (172).

8. The holder (100) of Claim 7, further comprising:
a first pivot connection (142) between the first arm (140) and the first post (120); and
a second pivot connection (152) between the second arm (150) and the second post (130),
wherein:
the first counterweight end (164) is aligned with the first pivot connection (142) when the first arm (140) is in the closed position; and
the second counterweight end (174) is aligned with the second pivot connection (152) when the second arm (150) is in the closed position.

9. The holder (100) of any preceding Claim, wherein:
the first post (120) comprises a first engagement surface (122);
the second post (130) comprises a second engagement surface (132); and
the first engagement surface (122) and the second engagement surface (132) face each other to form a portion of a retention boundary (114) of the retention volume (112), optionally,
wherein at least one of:
the first engagement surface (122) is a concave surface; and
the second engagement surface (132) is a concave surface.

10. The holder (100) of Claim 9, wherein at least one of:
the first post (120) comprises a first capture surface (124) extending from the first engagement surface (122) and forming a portion of the retention boundary (114) of the retention volume (112); and
the second post (130) comprises a second capture surface (134) extending from the second engagement surface (132) and forming a portion of the retention boundary (114) of the retention volume (112).

11. The holder (100) of any preceding Claim, wherein:
the first arm (140) comprises a first free end (144);
the second arm (150) comprises a second free end (154); and
the first free end (144) and the second free end (154) overlap when the first arm (140) and the second arm (150) are in the closed position.

12. The holder (100) of any preceding Claim, wherein:
the frame (110) further comprises a base (116);
the first post (120) extends from the base (116);
the second post (130) extends from the base (116).

13. An electrical raceway system (300) comprising:
a forming board (310);
a plurality of holders (100) coupled to the forming board (310), each one of the holders (100) comprising:
a frame (110) comprising a first post (120) and a second post (130) that is spaced away from the first post (120), wherein the first post (120) and the second post (130) form a retention volume (112);
a first arm (140) coupled to the first post (120) and movable relative to the first post (120); and
a second arm (150) coupled to the second post (130) and movable relative to the second post (130); and
a wire bundle (320), comprising a plurality of wires (324), positioned in the retention volume (112),
wherein the first arm (140) and the second arm (150) are movable between a first open position for positioning the wires (324) in the retention volume (112), a closed position for enclosing the wires (324) in the retention volume (112), and a second open position for removing the wires (324) from the retention volume (112).

14. A method (1000) for supporting an elongate member (224), the method (1000) comprising:
coupling a holder (100) to a support platform (210);
positioning the elongate member (224) on at least one of a first arm (140) and a second arm (150) of the holder (100);
applying a downward force on the elongate member (224) to downwardly pivot at least one of the first arm (140) and the second arm (150) to a first open position relative to a first post (120) and a second post (130) of the holder (100) and to position the elongate member (224) in a retention volume (112) formed between the first post (120) and the second post (130); and
pivoting the first arm (140) and the second arm (150) to a closed position relative to first post (120) and the second post (130); and
enclosing the elongate member (224) in the retention volume (112) between the first post (120), the second post (130), the first arm (140), and the second arm (150).

15. The method (1000) of Claim 14, further comprising one or more of:
biasing the first arm (140) and the second arm (150) to the closed position using a first cantilever (160) extending from the first arm (140) and a second cantilever (170) extending from the second arm (150); and
limiting pivotal movement of the first arm (140) and the second arm (150) in the first open position using a first stop (180) extending from the first arm (140) and a second stop (190) extending from the second arm (150)and/or,
wherein the elongate member (224) is one of a plurality of elongate members (224) and the method (1000) further comprises:
positioning the elongate members (224) within the retention volume (112) between the first post (120) and the second post (130); and
retaining the elongate members (224) with a fastener (230) to form a bundle (220) within the retention volume (112), optionally,
the method further comprising applying an upward force on the bundle (220) to upwardly pivot the first arm (140) and the second arm (150) to a second open position relative to the first post (120) and the second post (130) and to remove the bundle (220) from the retention volume (112) between the first post (120) and the second post (130).
